(19) Europäisches Patentamt / European Patent Office / Office européen des brevets

(11) **EP 3 295 258 B1**

(12) **FASCICULE DE BREVET EUROPEEN**

(45) Date de publication et mention de la délivrance du brevet:
**10.07.2019 Bulletin 2019/28**

(21) Numéro de dépôt: **16726140.3**

(22) Date de dépôt: **10.05.2016**

(51) Int Cl.:
**G03H 1/04** *(2006.01)*  **G03H 1/26** *(2006.01)*
**G03H 1/08** *(2006.01)*

(86) Numéro de dépôt international:
**PCT/FR2016/051087**

(87) Numéro de publication internationale:
**WO 2016/181061 (17.11.2016 Gazette 2016/46)**

(54) **PROCEDE DE GENERATION NUMERIQUE D'UN HOLOGRAMME, DISPOSITIF ET PROGRAMME D'ORDINATEUR ASSOCIES**

VERFAHREN ZUR DIGITALEN ERZEUGUNG EINES HOLOGRAMMS, ZUGEHÖRIGE VORRICHTUNG UND COMPUTERPROGRAMM

METHOD FOR DIGITALLY GENERATING A HOLOGRAM, ASSOCIATED DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2015 FR 1554363**

(43) Date de publication de la demande:
**21.03.2018 Bulletin 2018/12**

(73) Titulaire: **B<>COM**
**35510 Cesson-Sévigné (FR)**

(72) Inventeurs:
• **GILLES, Antonin**
**35000 Rennes (FR)**
• **GIOIA, Patrick**
**35530 Servon Sur Vilaine (FR)**
• **COZOT, Rémi**
**22350 Yvignac Le Grand (FR)**
• **MORIN, Luce**
**35700 Rennes (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
• **UNDERKOFFLER JOHN: "Occlusion processing and smooth surface shading for fully computed synthetic holography", PROCEEDINGS OF SPIE, SPIE - INTERNATIONAL SOCIETY FOR OPTICAL ENGINEERING, US, vol. 3011, 10 février 1997 (1997-02-10), pages 19-30, XP007903740, ISSN: 0277-786X, DOI: 10.1117/12.271359 cité dans la demande**
• **MATSUSHIMA K: "Exact hidden-surface removal in digitally synthetic full-parallax holograms", PROCEEDINGS OF SPIE, SPIE, US, vol. 5742, 25 janvier 2005 (2005-01-25), pages 25-32, XP040200952, ISSN: 0277-786X, DOI: 10.1117/12.592520 cité dans la demande**

**Description**

## 1. Domaine de l'invention

Le domaine de l'invention est celui de la génération numérique d'un champ lumineux d'hologramme.

## 2. Présentation de l'art antérieur

L'holographie est souvent considérée comme la technologie de visualisation 3D la plus prometteuse puisqu'elle elle fournit une illusion du relief la plus naturelle et la plus réaliste possible, et ceci sans la nécessité de porter de lunettes et sans causer de fatigue visuelle. En effet, cette technologie permet de fournir tous les indices de perception de la profondeur du système visuel humain. Ces dernières années, plusieurs méthodes de génération numérique d'hologrammes ont été proposées. Grâce à ces méthodes, il est possible d'obtenir l'hologramme d'une scène réelle ou synthétique en simulant la propagation de la lumière provenant de la scène vers le plan de l'hologramme.

On connait du document de génération de J. S. Underkoffler, intitulé « Occlusion Processing and smooth surface shading for fully computed synthetic holography », publié dans les proceedings de la conférence « Practical Holography XI and Holographic Materials II, en avril 1997, Proc. SPIE 3011,, pp 19-30, 00048, une technique de génération numérique d'hologrammes consistant à décomposer la scène en un nuage de points lumineux et à calculer l'onde lumineuse issue de la scène comme la somme des ondes sphériques émises par chacun des points. Dans la suite de cet article, nous appellerons cette approche "basée points". Cette approche basée points est très flexible n'impose aucune restriction sur la géométrie de la scène. Cependant, la complexité algorithmique de cette approche est très grande puisqu'elle nécessite un calcul par point de la scène et par pixel de l'hologramme. De plus, pour que les surfaces apparaissent continues, la scène doit être échantillonnée à l'aide d'un très grand nombre de points, rendant la génération de l'hologramme beaucoup trop lente. Afin de réduire la complexité algorithmique de cette approche, plusieurs méthodes ont été proposées, basées sur l'utilisation de tables de correspondance pré-calculées, la réduction des redondances spatiales, l'utilisation de formules de récurrence, l'utilisation de plans intermédiaires, ou encore le recours à des cartes graphiques ou à du matériel spécifique. De plus, il est possible de réduire le nombre de tests de visibilité nécessaires pour la gestion des occultations en groupant les pixels de l'hologramme ou encore en groupant les points de la scène.

On connait en outre du document de K. Matsushima, intitulé « Exact hidden-surface removal in digitally synthetic full-parallax holograms », publié dans les Proceedings de la conférence « Practical holography XIX : Material and applications », qui s'est tenue à San Jose en Californie, en 2005, une autre approche consistant à décomposer la scène en un ensemble de plans parallèles au plan de l'hologramme et à calculer la propagation de l'onde lumineuse issue de la scène d'un plan à un autre en utilisant des formules de propagation de la lumière telles que la formule du spectre angulaire. Dans la suite, nous appellerons cette approche "basée champ". Le calcul du spectre angulaire nécessitant deux Transformées de Fourier Rapide (FFT), sa complexité algorithmique est plus importante que celle du calcul de l'onde sphérique issue d'un point. En revanche, l'onde émise par chacun des points compris dans un même plan est calculée en une seule fois grâce au spectre angulaire. Ainsi, cette approche est plus efficace que l'approche basée points lorsque les objets de la scène sont constitués de grands plans parallèles au plan de l'hologramme. En revanche, lorsque la scène comprend des formes plus complexes, un nombre important de plans contenant peu de points est nécessaire pour l'échantillonner, rendant cette approche moins efficace que l'approche basée points.

Quelle que soit la méthode utilisée, une contrainte importante en holographie est la capacité à restituer les occultations entre les objets de la scène. En effet, les occultations dans la scène constituent l'un des indices de perception de la profondeur les plus importants. La prise en compte des occultations en génération numérique d'hologrammes est l'équivalent de la détermination des surfaces cachées en synthèse d'image. Cependant, contrairement aux images synthétiques, un hologramme généré numériquement fournit la parallaxe de mouvement, qui est liée aux occultations. Ainsi, la prise en compte des occultations en génération numérique d'hologrammes implique que les objets visibles changent en fonction du point de vue de l'utilisateur. Les techniques de gestion des occultations dépendent de l'approche utilisée.

Dans l'approche basée points, les occultations entre objets de la scène sont habituellement prises en compte en effectuant un test de visibilité pour vérifier la présence ou non d'obstacles entre chaque point de la scène et chaque pixel de l'hologramme.

Dans l'approche basée champ, les occultations entre objets de la scène sont prises en compte à chaque étape de diffraction en multipliant le champ lumineux incident sur un plan donné par le masque binaire de ce plan, supprimant ainsi la nécessité d'effectuer de test de visibilité.

## 3. Inconvénients de l'art antérieur

La méthode basée points est très calculatoire et la méthode basée champ n'est pas adaptée aux scènes réelles comprenant des formes complexes.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permette de générer un hologramme à partir d'une scène réelle pour un coût moindre en termes de ressources de calcul que les techniques existantes.

Un autre objectif de l'invention est de proposer une solution qui soit aussi capable de gérer efficacement les occultations de la scène.

### 5. Exposé de l'invention

Ces objectifs, ainsi que d'autres qui apparaîtront par la suite, sont atteints à l'aide d'un procédé de génération numérique d'un hologramme dans un plan, dit plan de l'hologramme, à partir d'une scène tridimensionnelle, comprenant une étape de découpage de ladite scène en une pluralité de plans parallèles au plan de l'hologramme.

Le procédé selon l'invention est particulier en ce qu'il comprend les étapes suivantes, mises en oeuvre pour un plan de la pluralité de plans, dit plan courant, les plans étant parcourus du plus éloigné au plus proche du plan de l'hologramme :

- comptage d'un nombre de points de la scène d'amplitude non nulle dans le plan courant ;

- choix d'une première ou d'une deuxième technique de propagation d'une onde lumineuse émise par le plan courant en fonction d'un nombre de points d'amplitude non nulle de la portion de scène comprise dans le plan courant et d'une valeur de seuil prédéterminée, la première technique, dite basée points, destinées à calculer la propagation d'une somme d'ondes lumineuses émises par des sources ponctuelles constituées par les points de la portion de scène d'amplitude non nulle du plan courant sur un plan suivant, la deuxième technique, dite basée champ, destinée à calculer globalement la propagation d'un champ lumineux émis par la portion de scène comprise dans le plan courant sur un plan suivant, la première technique étant choisie si le nombre de points est strictement inférieur à la valeur de seuil prédéterminée et la deuxième sinon ;

- traitement du plan courant en fonction de la technique de propagation choisie, destiné à calculer une onde lumineuse émise par le plan courant.

Selon l'invention, lesdites étapes sont répétées pour la pluralité de plans et le procédé comprend en outre une étape d'obtention de l'hologramme à partir des ondes lumineuses calculées pour la pluralité de plans.

Alors que les méthodes de l'état de l'art se basent sur une décomposition de la scène en une pluralité de plans qu'elles traitent soit globalement selon un technique basée champ ou soit localement selon une technique basée points, l'invention utilise les deux approches conjointement et tire ainsi parti des avantages de chacune d'entre elles.

Tout d'abord, la scène est décomposée en un ensemble de plans parallèles au plan de l'hologramme. Ensuite, l'onde lumineuse provenant de la scène est propagée d'un plan à un autre en partant du plan le plus distant. Selon le nombre de points de la scène compris dans un plan l'onde lumineuse émise par les points de la scène est calculée soit en considérant chaque point indépendamment, soit en considérant le plan dans son ensemble. Enfin, l'onde lumineuse est propagée jusqu'au plan de l'hologramme afin d'obtenir l'hologramme final.

Avec l'invention, on choisit la méthode la plus adaptée à la scène. Les plans comprenant un faible nombre de points d'amplitude non nulle sont avantageusement traités par la méthode basée points, pour un coût raisonnable, tandis que les plans comprenant un nombre de points supérieur à la valeur d'un seuil prédéterminé sont traités globalement par la méthode basée champ.

Selon un aspect de l'invention, ladite étape de traitement du plan courant comprend les sous-étapes suivantes :

- identification du dernier plan traité selon la deuxième technique, dit dernier plan basé champ;

- calcul de l'onde lumineuse émise par la portion de scène comprise dans le plan courant ;

- lorsque la deuxième technique a été choisie pour le plan courant, dit plan basé champ, l'étape de traitement comprend les sous-étapes suivantes :

  ◦ calcul d'une propagation de l'onde lumineuse émise par au moins le dernier plan basé champ sur le plan courant, selon la technique choisie pour ledit plan;

○ calcul de l'onde lumineuse émise par le plan courant par sommation de l'onde lumineuse émise par le plan courant et au moins la propagation de l'onde lumineuse émise par au moins le dernier plan basé champ ; et

l'étape d'obtention de l'hologramme comprend le calcul de la propagation de l'onde lumineuse émise par le plan basé champ le plus proche de l'hologramme sur le plan de l'hologramme.

Avantageusement, l'invention traite la propagation des ondes lumineuses de proche en proche, d'un plan basé champ à l'autre. L'hologramme est obtenu par simple propagation du champ lumineux calculé par le plan basé champ le plus proche du plan de l'hologramme, selon la deuxième technique.

Selon encore un autre aspect de l'invention, lorsque ledit au moins un plan précédent comprend en outre au moins un plan basé points, intercalé entre le dernier plan basé champ et le plan courant, le calcul de la propagation de l'onde lumineuse émise par au moins le dernier plan basé champ sur le plan courant comprend en outre le calcul d'une propagation de l'onde lumineuse émise par les points d'amplitude non nulle de la portion de scène comprise dans ledit au moins un plan intercalaire sur le plan courant selon la première technique.

Les ondes lumineuses émises par des plans basés points intercalaires sont elles aussi propagées directement jusqu'au plan basé champ courant. De cette manière, l'invention ne gère que la propagation d'une onde lumineuse issue d'un plan basé points sur un plan basé champ, dont la complexité dépend du nombre de points d'amplitude non nulle initialement présents dans la portion de scène comprise dans le plan basé points. Un avantage est de maîtriser la complexité calculatoire de la méthode proposée.

Selon une caractéristique avantageuse de l'invention, l'étape de traitement du plan courant comprend une sous-étape de gestion d'une occultation de l'onde lumineuse propagée par au moins le dernier plan basé champ dans le plan courant par application d'un masque binaire occultant à ladite onde lumineuse, ledit masque prenant une valeur nulle aux points de la portion de scène comprise dans le plan courant et une valeur non nulle en dehors de cette portion et en ce que la sous-étape de calcul de l'onde lumineuse totale émise par le plan courant comprend une sommation de l'onde lumineuse émise par le plan courant à l'onde lumineuse obtenue après application du masque binaire occultant.

De cette manière, pour un plan courant basé champ, on ne propage pas l'onde lumineuse issue des plans précédents aux points non nuls de la portion de scène comprise dans le plan courant.

Selon encore un autre aspect de l'invention, lorsque la première technique a été choisie pour traiter le plan courant, dit plan dit basé points, l'étape de traitement comprend en outre les sous-étapes suivantes :

- calcul d'une onde lumineuse propagée par au moins le dernier plan basé champ selon la première technique et bloquée par les points d'amplitude non nulle de la portion de scène comprise dans le plan courant ;

- calcul de l'onde lumineuse émise par le plan courant par soustraction de l'onde lumineuse bloquée par les points d'amplitude non nulle de la portion de scène comprise dans le plan courant à l'onde lumineuse émise par lesdits points.

L'invention permet de gérer les occultations dues aux plans basés point intercalaires, tout en maîtrisant la complexité calculatoire de la méthode. En effet, elle évite de créer de nouveaux points dans les plans basés points en propageant le champ lumineux d'un plan précédent basé point ou les ondes lumineuses d'un plan précédent basé point, de manière à ne pas illuminer de points supplémentaires dans le plan basé points courant et à ne pas augmenter le temps de calcul dû au traitement du plan basé points courant. A la place, elle propose de calculer au niveau de chaque plan intercalaire basé points, l'amplitude de l'onde lumineuse bloquée par la scène dans ce plan et de la propager jusqu'au plan basé champ suivant. De cette manière, elle transmet au plan basé champ suivant l'information relative à la quantité d'onde lumineuse issue des plans précédents qui est occultée par ce plan intermédiaire. L'amplitude de l'onde lumineuse bloquée est ensuite soustraite à celle de l'onde lumineuse issue des plans précédents qui avait été propagée directement vers le plan basé champ suivant, comme s'il n'y avait pas d'occultation par les plans intercalaires. Ainsi, l'invention propose une solution astucieuse au problème de la gestion des occultations entre deux plans de nature différente, qui, pour un plan donnée, ne remet pas en cause le principe de choix d'une technique de propagation adaptée à la complexité de la portion de scène comprise dans ce plan.

Selon encore un autre aspect de l'invention, la sous-étape de calcul de l'onde lumineuse bloquée comprend le calcul des ondes lumineuses propagées au moins par le dernier plan basé champ selon la première technique et l'application d'un masque binaire occultant inversé à l'onde lumineuse calculée, ledit masque prenant une valeur non nulle aux points de la portion de scène comprise dans le plan courant et une valeur nulle en dehors de cette portion.

Un premier avantage de cette technique de masque inversé est qu'elle permet d'obtenir simplement l'amplitude des ondes lumineuses bloquées par le plan basé points courant.

Un deuxième avantage est qu'il permet de limiter le calcul de l'onde bloquée aux points d'amplitude non nulle de la scène, puisqu'ailleurs le masque binaire inversé prend une valeur nulle.

Selon un autre aspect de l'invention, la sous-étape de calcul de l'onde lumineuse bloquée comprend un découpage en une pluralités de zones du plan courant, une détermination des points d'un plan précédent à partir du dernier plan basé champ, contribuant à la propagation d'une onde lumineuse dans une zone de la pluralité de zones comprenant des points d'amplitude non nulle de la portion de scène comprise dans le plan courant, le calcul de l'onde lumineuse bloquée n'étant effectué que pour les points déterminés.

Avantageusement, on limite le calcul aux points du plan précédents qui contribuent à illuminer les points non nuls de la scène comprise dans le plan courant.

Selon un aspect de l'invention, le procédé comprend une étape d'évaluation du seuil au moins en fonction d'un temps de traitement estimé pour la première technique de propagation, d'un temps de traitement estimé pour la deuxième technique de propagation pour le plan courant, et d'un nombre de points d'amplitude non nulle des portions de scène comprises dans les plans précédents.

Avantageusement, le seuil est évalué spécifiquement pour chaque plan de la scène, ce qui garantit de choisir, pour ce plan, la méthode la moins coûteuse en temps de calcul. Les temps de traitement estimés pour chacune des techniques de propagation peuvent aussi prendre en compte la gestion des occultations selon l'invention.

Le procédé qui vient d'être décrit dans ses différents modes de réalisation est avantageusement mis en oeuvre par un dispositif de génération numérique d'un hologramme dans un plan, dit plan de l'hologramme, à partir d'une scène tridimensionnelle, comprenant une unité de découpage de ladite scène en une pluralité de plans parallèles au plan de l'hologramme.

Un tel dispositif comprend les unités suivantes, aptes à être mises en oeuvre pour un plan de la pluralité de plans, dit plan courant, les plans étant parcourus du plus éloigné au plus proche du plan de l'hologramme :

- comptage d'un nombre de points de la scène d'amplitude non nulle dans le plan courant ;

- choix d'une première ou d'une deuxième technique de propagation d'une onde lumineuse émise par le plan courant en fonction d'un nombre de points d'amplitude non nulle de la portion de scène comprise dans le plan courant et d'une valeur de seuil prédéterminée, la première technique, dite basée points, destinée à calculer la propagation d'une somme d'ondes lumineuses émises par des sources ponctuelles constituées par les points de la portion de scène d'amplitude non nulle du plan courant sur un plan suivant, la deuxième technique, dite basée champ, destinée à calculer globalement la propagation d'une onde lumineuse émise par la portion de scène comprise dans le plan courant sur un plan suivant, ,la première technique étant choisie si le nombre de points est strictement inférieur à la valeur de seuil prédéterminée et la deuxième sinon ;

- traitement du plan courant selon la technique de propagation choisie, destiné à calculer une onde lumineuse émise par le plan courant.

Selon l'invention, la mise en oeuvre desdites unités est répétée pour la pluralité de plans et le dispositif comprend en outre une unité d'obtention de l'hologramme à partir des ondes lumineuses calculées pour la pluralité de plans.

Corrélativement, l'invention concerne aussi un terminal d'utilisateur comprenant un module de commande d'un dispositif de restitution d'un hologramme. Ledit terminal comprend en outre un dispositif de génération numérique dudit hologramme selon l'invention.

L'invention concerne encore un programme d'ordinateur comportant des instructions pour la mise en oeuvre des étapes d'un procédé de génération d'un hologramme tel que décrit précédemment, lorsque ce programme est exécuté par un processeur.

Ce programme peut utiliser n'importe quel langage de programmation. Il peut être téléchargé depuis un réseau de communication et/ou enregistrés sur un support lisible par ordinateur.

L'invention se rapporte enfin à un support d'enregistrement, lisible par un processeur, intégré ou non au dispositif de génération numérique d'un hologramme, éventuellement amovible, mémorisant respectivement un programme d'ordinateur mettant en oeuvre un procédé de génération numérique d'un hologramme, tels que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** illustre un exemple de scène tridimensionnelle découpée en une pluralité de plans parallèles au plan de l'hologramme ;

- la figure **2** présente de façon schématique les étapes du procédé de génération numérique d'un hologramme selon un mode de réalisation de l'invention ;

- la figure **3** présente de façon schématique le découpage d'une scène tridimensionnelle en une pluralité de plans parallèles au plan de l'hologramme, et la propagation des ondes lumineuses entre deux plans basés champ successifs selon un mode de réalisation de l'invention ;

- la figure **4** détaille l'étape de traitement d'un plan courant selon un mode de réalisation de l'invention ;

- la figure **5** illustre de façon schématique une région de contribution d'un point lumineux prise en compte par la technique de propagation d'une onde lumineuse basée points ;

- la figure **6** illustre de façon schématique le traitement des ondes lumineuses propagées par les plans précédents sur un plan basé champ selon l'invention ;

- la figure **7** présente de façon schématique un exemple de masque occultant mis en oeuvre par l'invention pour la portion de scène comprise dans un plan basé champ ;

- la figure **8** présente de façon schématique le masque occultant inverse mis en oeuvre par l'invention pour un plan basé points, selon un mode de réalisation de l'invention ;

- la figure **9** illustre de façon schématique le principe d'un mode de réalisation de l'invention permettant de simplifier le calcul de l'occultation des ondes lumineuses la portion de scène comprise dans un plan basé points;

- la figure **10** présente de façon schématique la structure matérielle d'un dispositif de génération numérique d'un champ d'hologramme selon l'invention ; et

- la figure **11** illustre un autre exemple d'usage de l'invention.

## 7. Description d'un mode de réalisation particulier de l'invention

Le principe général de l'invention repose sur le découpage d'une scène tridimensionnelle en une pluralité de plans parallèles au plan de l'hologramme et sur une solution hybride de génération numérique d'hologramme, mettant en oeuvre une première technique basée points pour les plans comprenant un nombre limité de points de la scène d'amplitude non nulle et une deuxième technique basée champ pour les plans comprenant un nombre plus important de points de la scène.

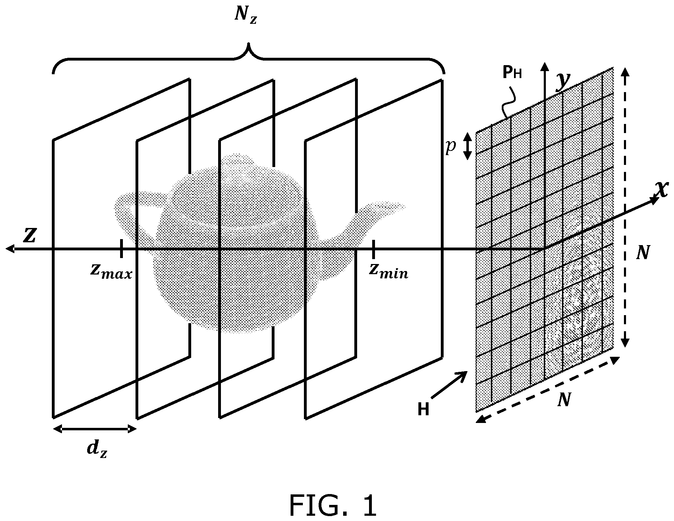

En relation avec la Figure **1,** on considère la géométrie d'une scène tridimensionnelle Sc comprenant une bouilloire, un plan $P_H$, dit plan de l'hologramme sur lequel un hologramme représentatif de la scène Sc doit être généré numériquement et une pluralité de plans $P_0$, $P_1$,...$P_{N_z-1}$ avec $N_z$ entier non nul supérieur ou égal à 2, parallèles au plan de l'hologramme $P_H$.

On considère en outre un référentiel (O, x, y, z), tel que l'hologramme soit inscrit dans le plan (O, x, y) et que l'axe Oz soit perpendiculaire à $P_H$ et à la pluralité de plans $P_i$.

Par exemple, les plans $P_i$ sont situés à égale distance $d_z$ les uns des autres. $P_0$ est le plan le plus éloigné du plan de l'hologramme, à la distance $z_{max}$ de $P_H$ et $P_{N_z-1}$ est le plan le plus proche du plan de l'hologramme, à la distance $z_{min}$ de $P_H$, avec $z_{min} < z_{max}$.

La distance $d_z$ est donc donnée par :

$$d_z = \frac{z_{max} - z_{min}}{N_z} \qquad (1)$$

Les plans $P_0$,... $P_{N_z-1}$ et le plan de l'hologramme $P_H$ sont échantillonnés sur une grille régulière de résolution $N \times N$ avec un pas d'échantillonnage p.

Dans la suite, on désignera par portion de scène comprise dans le plan $P_i$, avec i entier compris entre 0 et $N_z - 1$, la tranche de la scène tridimensionnelle Sc comprise entre le plan $P_i$ et le plan $P_{i+1}$.

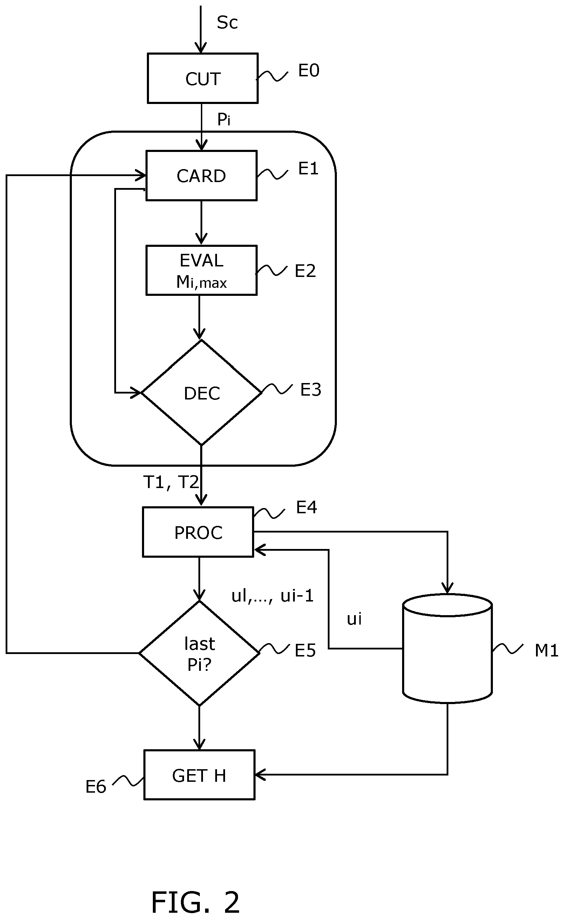

En relation avec la Figure 2, on décrit le procédé de génération numérique d'un hologramme dans le plan $P_H$ pour la scène Sc selon un mode de réalisation de l'invention.

Les plans $P_0$ à $P_{N_z-1}$ sont traités successivement du plus lointain au plus proche de l'hologramme.

Le premier plan $P_0$ et le dernier plan $P_{N_z-1}$ sont traités selon la méthode basé champ.

Pour un plan $P_i$, avec $i = 1...N_z$ -2, on compte au cours d'une étape E1 le nombre de points de la portion de scène comprise dans ce plan, c'est-à-dire les points dont la coordonnée z est comprise entre $z_{max}$ - $id_z$ et $z_{max}$ - ($i$ + 1)$d_z$, dont l'amplitude est non nulle.

On obtient un nombre $M_i$.

Au cours d'une étape E2, on évalue un seuil $M_{i,max}$ à partir d'une estimation d'un temps de traitement du plan courant selon la première méthode et d'un temps de calcul du plan courant selon la deuxième méthode. Un exemple de calcul de la valeur du seuil $M_{i,max}$ sera détaillé dans la suite de la description.

En E3, on compare le nombre de points $M_i$ obtenu au seuil $M_{i,max}$ évalué.

Si $M_i \geq M_{i,max}$, on décide de mettre en oeuvre la deuxième méthode, dite basée champ pour traiter le plan courant $P_i$. Le plan $P_i$ est alors désigné par plan « basé champ ».

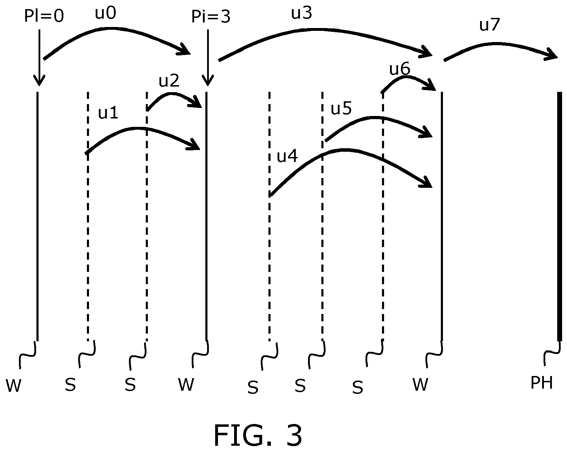

En relation avec la Figure **3**, on présente un exemple de découpage en plans successifs $P_0$ à $P_{N_z-1}$. Les plans $P_0$, $P_3$ et $P_7$ sont des plans basés champ. Les plans $P_1$, $P_2$, $P_4$, $P_5$ et $P_6$ sont des plans dits « basés points ».

En E4, le plan courant $P_i$ est traité en fonction de la technique de propagation choisie. Cette étape fournit l'onde lumineuse totale $u_i$ émise par ce plan. De façon avantageuse, elle est stockée dans une mémoire M1.

En E5, on teste si le plan courant est le dernier plan, c'est-à-dire si $i = N_z$ -1. Si ce n'est pas le cas, on incrémente $i$ et on répète les étapes précédemment décrites pour le plan suivant.

Si $i = N_z$ -1, on passe à l'étape E7. Au cours de cette étape, on calcule la propagation de l'onde lumineuse $u_{N_z-1}$ émise par le dernier plan $P_{N_z-1}$ sur le plan de l'hologramme, selon la technique de propagation basée champ et on obtient l'hologramme H.

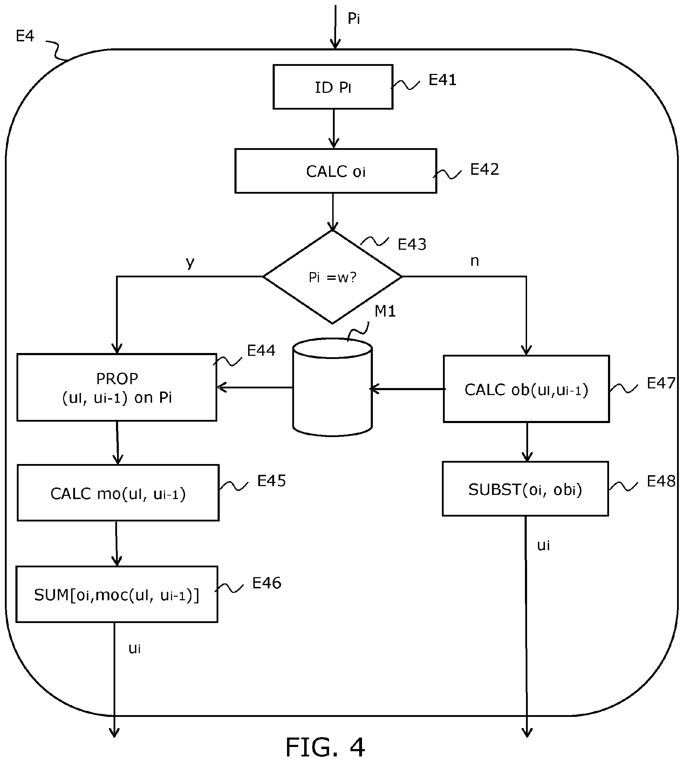

L'étape de traitement E4 va maintenant être détaillée en relation avec la Figure **4**, pour un plan basé champ, par exemple le plan $P_3$, puis pour un plan basé points, par exemple $P_2$.

En E41 on identifie parmi les plans précédents, déjà traités, le plan basé champ le plus proche ou dernier plan basé champ. Dans l'exemple de la Figure **3**, il s'agit du plan P0. Dans la suite, on lui affecte l'indice I, avec I entier compris entre 0 et Nz-1.

En E42, on calcule l'onde lumineuse émise par la portion de scène comprise dans le plan $P_i$.

Chaque plan $P_i$ fonctionne comme une source de lumière qui émet une onde complexe oi donnée par :

$$o_i(x, y) = a_i(x, y) \exp[j\varphi_i(x, y)] \qquad (2)$$

où $a_i(x, y)$ est l'amplitude du point aux coordonnées (x, y) dans le plan Pi et $\varphi_i(x, y)$ est sa phase, initialisée aléatoirement afin de restituer une scène diffuse.

L'amplitude $a_i(x,y)$ est calculée en utilisant un modèle d'illumination, par exemple celui décrit par Phong dans l'article « Illumination for Computer Generated Pictures » publié dans le volume 18, issue 6 du journal « Communications of the ACM », pages 311-317, en 1975.

En E44, on calcule la propagation des ondes lumineuses complexes émises par les plans précédents à partir du plan basé champ précédent PI à Pi-1, à savoir dans l'exemple de la Figure **3** P0, P1 et P2, jusqu'au plan courant Pi selon la technique de propagation T1 ou T2 choisie pour chaque plan précédent.

Pour le plan $P_I = P_0$ basé champ, la propagation de la lumière jusqu'au plan $P_i$ est calculée à l'aide de la formule du spectre angulaire connue de l'homme de métier et décrite par Goodman dans le livre intitulé « Introduction to Fourier Optics », pages 55 à 58 et édité par Roberts and Company Publishers en 2005.

Le spectre angulaire exprime la propagation d'une onde lumineuse entre deux plans parallèles séparés d'une distance z par :

$$P_z^w\{o\}(x, y) = \mathcal{F}^{-1}\left\{\mathcal{F}\{o\} \exp\left(-j2\pi\sqrt{\lambda^{-2} - f_X^2 - f_Y^2}\, z\right)\right\}(x, y) \qquad (3)$$

où À est la longueur d'onde de la lumière, $f_X$ et $f_Y$ sont les fréquences spatiales, et $\mathcal{F}$ et $\mathcal{F}^{-1}$ sont respectivement la Transformée de Fourier et la Transformée de Fourier Inverse. Ces transformées peuvent être calculées en utilisant un algorithme de Transformée de Fourier Rapide de type FFT (pour «Fast Fourier Transform » en anglais. La complexité algorithmique de l'opérateur $P^w$ est donc de $O(N^2 \log(N))$.

Dans la suite, on désignera par $P_z^w$, l'opérateur de propagation d'une onde lumineuse selon la technique basée champs sur une distance z.

La propagation de l'onde lumineuse $u_0 = o_0$ du plan $P_0$ sur le plan $P_i$ peut donc s'exprimer comme suit :

$$u_i^w(x,y) = P_{z_{max}-id_z}^w\{u_0\}(x,y) = \mathcal{F}^{-1}\left\{\mathcal{F}\{u_0\}\,exp\left(-j2\pi\sqrt{\lambda^{-2}-f_X^2-f_Y^2}(z_{max}-id_z)\right)\right\}(x,y) \quad (4)$$

On considère maintenant la propagation des ondes lumineuses émises par les plans intercalaires $P_j$ avec j entier compris entre I+1 et i-1. Dans l'exemple de la Figure **3**, les plans $P_1$ et $P_2$ sont basés points. On désigne par $\mu_j$ l'onde lumineuse émise par le plan intercalaire $P_j$. L'onde lumineuse $u_j$, $u_2$ est obtenue en mettant en oeuvre l'étape de traitement E4 selon l'invention dans le cas d'un plan « basé points ». Elle sera détaillée dans la suite de la description.

La propagation de l'onde lumineuse $u_1$ du plan $P_1$ basé points sur le plan $P_i$, i = 3 est donc calculée en utilisant la première technique dite basé points.

La propagation de l'onde lumineuse uj d'un plan Pj basé points sur le plan Pi est donc calculée en utilisant la première technique dite basé points.

Suivant l'approche basée points, les points de la scène situés dans chaque plan sont considérés comme des sources lumineuses sphériques et la propagation de la lumière provenant de ce plan jusqu'au plan Pi est calculée comme la somme des ondes sphériques émises par chacun des points du plan. L'onde sphérique émise par un point lumineux k de coordonnées $(X_k, Y_k, z)$ est donnée par une formule de spectre angulaire connue de l'homme de métier et par exemple décrite dans le livre de Goodman, intitulé « Introduction to Fourier Optics », pages 57 à 61 et édité par Roberts and Company Publishers en 2005, de la façon suivante :

$$w_k(x,y) = o(x_k,y_k)\mathcal{F}^{-1}\left\{e^{-j2\pi\sqrt{\lambda^{-2}-f_X^2-f_Y^2}z}\right\}\otimes\delta(x-x_k,y-y_k) \quad (5)$$

où $0(x_k, y_k)$ est l'amplitude complexe du point et $\otimes$ est l'opérateur de convolution. La convolution d'une fonction avec une impulsion de Dirac la recentre autour de l'impulsion. Ainsi, si l'on connait le terme de la transformée de Fourier dans l'équation (5) à l'avance, $W_k$ peut être calculée simplement en factorisant ce terme avec l'amplitude du point, puis en la décalant spatialement. Afin d'accélérer le calcul, il est possible d'utiliser une table de correspondance pré-calculée T donnée par

$$T(x,y,z) = \mathcal{F}^{-1}\left\{e^{-j2\pi\sqrt{\lambda^{-2}-f_X^2-f_Y^2}z}\right\}h(x,y,z) \quad (6)$$

h est une fonction fenêtre permettant de restreindre la région de contribution d'un point donné, égale à un dans la région de contribution du point et à zéro ailleurs. Cette fonction limite les fréquences spatiales de l'onde complexe afin d'éviter le recouvrement de spectre dans l'hologramme. Suivant le critère de Nyquist, la fréquence spatiale maximale pouvant être représentée avec un pas d'échantillonnage de p est donnée par fmax $=2p^{-1}$.

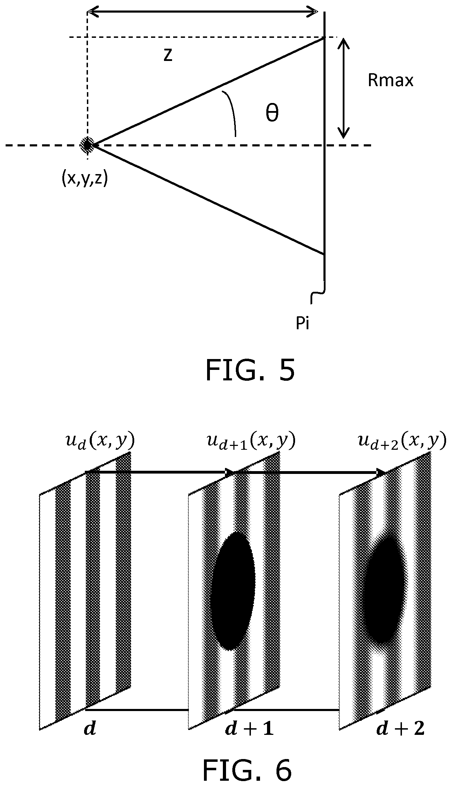

En relation avec la Figure **5,** on considère maintenant la région de contribution d'un point lumineux (x,y,z) sur un plan parallèle au plan de l'hologramme, par exemple le plan $P_i$ courant. L'équation des réseaux de diffraction, connue de l'homme de métier, et énoncée par exemple dans le document de Goodman déjà cité, donne la relation entre la fréquence spatiale maximale fmax et l'angle de diffraction maximum $\theta$ comme sin($\theta$) = $\lambda$fmax.

Ainsi, comme illustré par la Figure **5,** la région de contribution d'un point lumineux à la profondeur z est donnée par son rayon maximum $R_{max}$ tel que

$$R_{max} = z\tan(\theta) = z\tan\left(\sin^{-1}\left(\tfrac{\lambda}{2p}\right)\right) \quad (7)$$

La fonction fenêtre h peut ainsi être définie comme

$$h(x,y) = \begin{cases} 1 \text{ si } \sqrt{x^2+y^2} < R_{max} \\ 0 \text{ sinon} \end{cases} \quad (8)$$

Afin de limiter son nombre de pixels, la table de correspondance est pré-calculée uniquement dans le carré circonscrit au disque défini par la fonction fenêtre h. Ainsi, le nombre de pixels $N_{LUT,z}$ de la table de correspondance pour la profondeur z est donné par :

$$N_{LUT,z} = \left(\frac{2R_{max}}{p}\right)^2 = \left[\frac{2z}{p}\tan\left(\sin^{-1}\left(\frac{\lambda}{2p}\right)\right)\right]^2 \qquad (9)$$

La propagation de la lumière entre deux plans parallèles séparés par une distance z est calculée en adressant simplement cette table de correspondance:

$$P_z^s\{o\}(x,y) = \sum_{k=0}^{M-1} o(x_k,y_k)T(x-x_k,y-y_k,z) \qquad (10)$$

avec M le nombre de points lumineux situés dans le plan. La complexité algorithmique de l'opérateur $P^s$ est ainsi $O(N^2M)$. Ainsi, la propagation de l'onde lumineuse $u_1$ émise par le plan $P_1$ sur le plan courant $P_3$ peut s'exprimer comme suit :

$$u_i^{s1}(x,y) = P_{z_{max}-(i-1)d_z}^s\{u_1\}(x,y) = \sum_{k=0}^{M_1-1} u_1(x_k,y_k)T(x-x_k,y-y_k,z) \qquad (11)$$

De même, l'onde lumineuse $u_2$ émise par le plan $P_2$ sur le plan courant $P_3$ peut s'exprimer comme suit :

$$u_i^{s2}(x,y) = P_{z_{max}-(i-2)d_z}^s\{u_2\}(x,y) = \sum_{k=0}^{M_2-1} u_2(x_k,y_k)T(x-x_k,y-y_k,z) \qquad (12)$$

Ainsi, l'onde lumineuse $u_i^s$ propagée par les plans intercalaires basés points $P_{l+1}$ à $P_{i-1}$, sur le plan basé champ $P_i$, dans l'exemple $P_1$, $P_2$, peut s'exprimer de la façon suivante :

$$u_i^s(x,y) = \sum_{j=l+1}^{i-1} P_{(i-j)d_z}^s\{u_j\}(x,y) = \sum_{j=l+1}^{i-1}\sum_{k=0}^{M_j-1} u_j(x_k,y_k)T(x-x_k,y-y_k,z) \qquad (13)$$

On comprend que selon ce mode de réalisation de l'invention, on propagé les ondes lumineuses oj émises par tous les plans précédents à partir du plan basé champ $P_l$ directement sur le plan basé champ courant.

Un avantage de la solution proposée est qu'elle ne traite que les propagations d'une onde lumineuse d'un plan basé champ vers un autre plan basé champ ou d'un plan basé points sur un plan basé champ, qui sont relativement simples à calculer.

En E45, on prend en compte l'occultation des ondes lumineuses $u_j^s$, avec j = l+1 à i-1 et $u_l^w$ propagées des plans précédents par la portion de scène comprise dans le plan courant $P_i$.

Dans le cadre du traitement du plan courant basé champs, l'approche proposée met en oeuvre un masque binaire.

En relation avec la Figure **6,** on considère à titre illustratif un obstacle occultant situé dans le plan courant $P_{d+1}$. Une partie de l'onde lumineuse $u_d$ provenant du plan $P_d$, ne peut pas traverser l'obstacle occultant. L'amplitude de l'onde lumineuse $u_d$ devient donc nulle dans cette région.

Ce phénomène peut avantageusement être pris en compte en multipliant l'onde lumineuse incidente par un masque binaire $m_{d+1}$, qui prend la valeur zéro à l'intérieur de l'obstacle et un à l'extérieur. Si les points situés dans le plan $P_{d+1}$ émettent également une onde $O_{d+1}$, l'onde complexe $u_{d+2}$ incidente sur le plan $P_{d+2}$ est donnée par

$$u_{d+2}(x,y) = P_{dz}\{o_{d+1} + m_{d+1}P_{dz}\{u_d\}\}(x,y) \qquad (14)$$

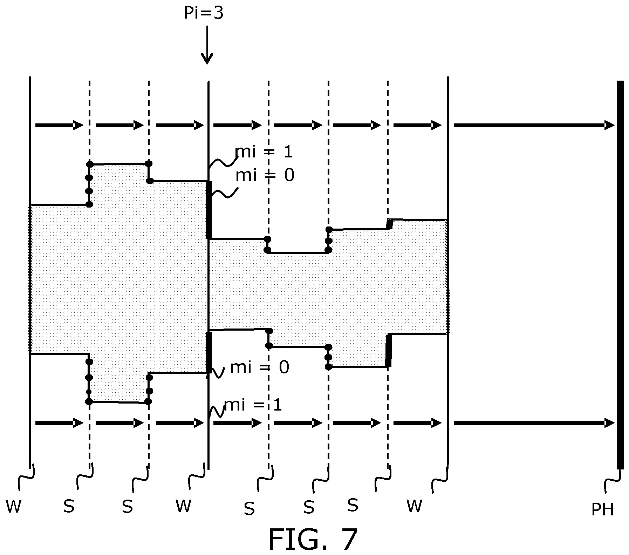

En relation avec la Figure **7**, on a représenté sous forme de segments de droite élargis les zones du plan courant $P_i$ pour lesquelles le masque binaire occultant $m_i$ vaut 0. Pour les points situés en dehors de ces zones, le masque binaire occultant vaut 1.

Dans le cas du plan basé champ Pi, on généralise cette méthode et on calcule l'occultation des ondes lumineuses propagées depuis les plans précédents $P_l$ à $P_{i-1}$ en multipliant celles-ci par le masque binaire $m_i$, selon la formule

$$\hat{u}_i(x,y) = m_i(x,y)[u_i^w(x,y) + u_i^s(x,y)] = m_i(x,y)\left[\sum_{j=l+1}^{i-1} P_{(i-j)d_z}^s\{u_j\}(x,y) + P_{(i-l)d_z}^w\{u_l\}(x,y)\right] \quad (15)$$

En $E_{46}$, on calcule l'onde lumineuse totale émise par le plan courant basé champ $P_i$, dans l'exemple $P_3$, en sommant l'onde lumineuse $O_i$ émise par la portion de scène comprise dans le plan $P_i$ et les ondes lumineuses propagées depuis les plans précédents $P_l$ à $P_{i-1}$, dans l'exemple $P_0$, $P_1$, $P_2$, auxquelles on a appliqué le masque occultant mi du plan $P_i$ selon la formule suivante :

$$u_i(x,y) = o_i(x,y) + m_i(x,y)[u_i^w(x,y) + u_i^s(x,y)] \qquad (16)$$

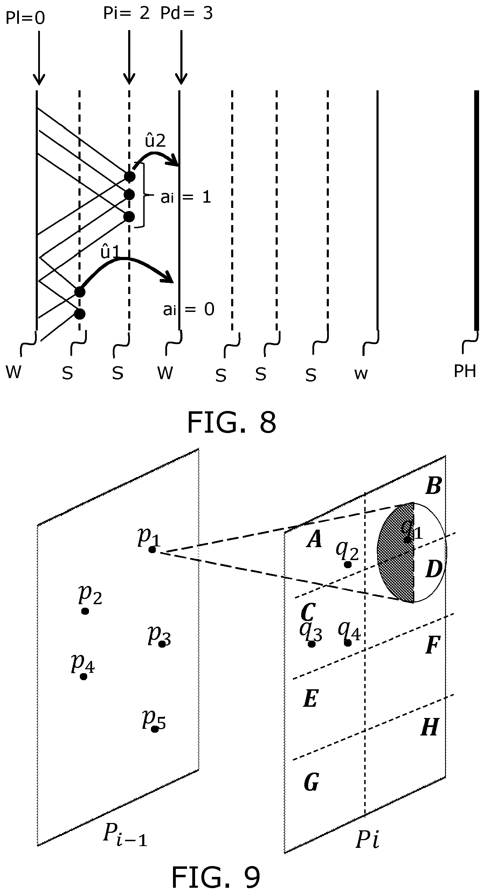

On considère maintenant le cas d'un plan courant $P_i$ basé points. On comprend que, selon l'invention, ce plan $P_i$ est un plan intercalé entre deux plans basés champ successifs, un plan précédent $P_l$, avec l<i et un plan suivant $P_d$, avec d>i, comme illustré par la Figure **8.**

L'étape de traitement $E_4$ met en oeuvre la sous-étape $E_{42}$ déjà décrite de calcul de l'onde lumineuse $o_i$ émise par les points de la portion de scène comprise dans le plan $P_i$ qui ont une amplitude non nulle selon l'équation (2) déjà décrite.

En $E_{47}$, on calcule l'amplitude des ondes lumineuses émises par des plans précédents à partir du plan basé champ $P_l$ jusqu'au plan $P_{i-1}$, et bloquées par des obstacles occultants de la scène comprise dans $P_i$. Il s'agit encore une fois des points de la scène qui présentent une amplitude non nulle.

Il s'agit donc de gérer les occultations des ondes lumineuses provenant des plans précédents, par un plan basé points.

Les inventeurs ont constaté que, bien que parfaitement adapté aux plans basés champ, dont l'onde lumineuse est calculée en utilisant l'opérateur $P^w$, la technique de prise en compte des occultations décrite en relation avec les Figures **6** et **7** pour les plans basés champs n'est pas du tout adaptée aux plans basés points. En effet, cette technique nécessite de calculer préalablement la propagation des ondes lumineuses de proche en proche, c'est-à-dire d'un plan précédent sur le plan courant basé points. Or, à chaque étape de diffraction, l'onde complexe émise par la scène s'étend graduellement d'un plan à un autre, et l'onde incidente sur le plan $P_i$ peut s'étendre sur un grand nombre d'échantillons. Ainsi, même si le plan Pi ne comporte qu'un petit nombre de points de la scène pour lesquels l'amplitude de l'onde lumineuse $o_i$ diffère de zéro, l'onde lumineuse totale ui' émise par ce plan peut avoir un grand nombre de valeurs non nulles. Chaque valeur non nulle de l'onde $u_i$ est alors considérée comme une source lumineuse sphérique par l'opérateur de propagation $P^s$ précédemment décrit. Autrement dit, l'onde incidente va illuminer un certain nombres de points supplémentaires dans le plan basé points courant et complexifier le traitement ultérieur de ce plan.

Or, comme on l'a vu précédemment, la complexité algorithmique de $P^s$ dépend du nombre de sources lumineuses sphériques situées dans le plan de source. L'utilisation de la technique précédente de prise en compte des occultations risquerait de rendre complètement inefficace le principe même de l'invention, à savoir de choisir la méthode de traitement adaptée à un plan en fonction du nombre de points d'amplitude non nulle dans la portion de scène qu'il contient.

L'invention propose une approche différente, adaptée aux plans basés points. Elle consiste à ne calculer l'amplitude de l'onde lumineuse provenant des plans précédents que pour les points d'amplitude non nulle de la scène du plan courant Pi'. Avantageusement, ce calcul s'appuie sur un masque binaire inversé. Il fournit l'amplitude de l'onde lumineuse bloquée par le plan courant.

En relation avec la Figure **8,** on considère un obstacle occultant situé dans le plan $P_{d+1}$ et on utilise un masque binaire inversé défini par

$$a_{d+1}(x, y) = 1 - m_{d+1}(x, y) \qquad (17)$$

En remplaçant $m_{d+1}$ dans l'équation (14) par l'expression de $a_{d+1}$ selon l'équation (17), $u_{d+2}$ devient :

$$u_{d+2}(x,y) = P_{dz}\{o_{d+1} + (1-a_{d+1})\,P_{dz}\{u_d\}\}(x,y)$$

$$u_{d+2}(x,y) = P_{2dz}\{u_d\}(x,y) + P_{dz}\{o_{d+1} - a_{d+1}\,P_{dz}\{u_d\}\}(x,y)$$

$$u_{d+2}(x,y) = P_{2dz}\{u_d\}(x,y) + P_{dz}\{\hat{u}_{d+1}\}(x,y) \qquad (18)$$

Le calcul de $u_{d+2}$ en utilisant le masque binaire inversé nécessite l'utilisation de l'opérateur de propagation P trois fois, alors qu'il n'est nécessaire de l'utiliser que deux fois en utilisant le masque binaire m. Cependant, la propagation numérique du plan $P_d$ au plan $P_{d+1}$ n'a besoin d'être calculée que dans la région définie par le masque binaire inversé $a_{d+1}$, qui correspond aux coordonnées des points de la scène situés dans le plan $P_{d+1}$. C'est pour cette raison qu'on utilise l'opérateur de propagation basé points $P^s$, même pour le plan précédent basé champ Pl. Ainsi, le nombre de valeurs non nulles de $\hat{u}_{d+1}$ est le même que le nombre de points de la scène pour lesquels l'amplitude de l'onde $o_{d+i}$ est différente de zéro. L'utilisation du masque binaire inversé présente l'avantage de ne pas augmenter le nombre de sources lumineuses sphériques dont l'onde doit être calculée à chaque pas de diffraction. Cette technique est ainsi extrêmement efficace pour la prise en compte des occultations par les plans basés points.

Cette technique de gestion des occultations se généralise pour le plan courant basé points $P_i$ par la formule suivante :

$$ub_i(x,y) = a_i(x,y) \sum_{j=l}^{i-1} P_{(i-j)d_z}^s \{u_j\}(x,y) \qquad (19)$$

où $u_{bi}$ est l'onde lumineuse propagée depuis les plans précédents et bloquée par les points de la scène d'amplitude non nulle du plan basé points $P_i$.

En E48, on calcule l'onde lumineuse totale ui émise par le plan Pi en soustrayant l'onde $o_{bi}$ bloquée à l'onde lumineuse émise par la portion de scène comprise dans le plan $P_i$.

$$u_i(x,y) = o_i(x,y) - ub_i(x,y) = o_i(x,y) - a_i(x,y) \sum_{j=l}^{i-1} P_{(i-j)d_z}^s \{u_j\}(x,y) \qquad (20)$$

On comprend que le fait de retrancher de l'amplitude de l'onde lumineuse émise par le plan basé points courant $P_i$ celle de l'onde lumineuse provenant des plans précédents et bloquée par le plan courant permet de transmettre au plan basé champ suivant l'information de ce qui a été occulté dans le plan intercalaire $P_i$.

La valeur de l'onde lumineuse $u_i$ obtenue pour le plan basé point $P_i$ contribue au calcul de l'onde lumineuse $u_d^s$ émise par les plans basés points intercalaires $P_j$, avec j = l+1,...d-1 et propagée sur le plan Pd . Elle est ensuite exploitée pour calculer l'onde lumineuse totale émise ud par le plan basé champ suivant Pd, selon l'équation (16) précédemment décrite :

$$u_d(x,y) = o_d(x,y) + m_d(x,y)[u_d^w(x,y) + u_d^s(x,y)] \qquad (16)$$

De cette manière, on compense au niveau du plan basé champ $P_d$, le fait d'avoir propagé les ondes lumineuses émises par les plans précédents sans prendre en compte les occultations par les plans intercalaires.

En relation avec la Figure 2, on revient maintenant sur l'étape $E_2$ d'évaluation d'un seuil pour le plan courant $P_i$ selon un mode de réalisation de l'invention.

Afin de pouvoir implémenter la méthode proposée, il faut déterminer expérimentalement la valeur de seuil $M_{d,max}$. On note $T_i^S$ le temps nécessaire au calcul de la propagation et de l'occultation de l'onde lumineuse issue de la scène par le plan Pi comportant $M_i$ points lumineux en utilisant l'approche basée points et $T_i^w$ le temps nécessaire à ce même calcul en utilisant l'approche basée champ. $T_i^S$ correspond à la somme du temps nécessaire au calcul de l'occultation de l'onde lumineuse par le plan Pi en utilisant la technique du masque binaire inversé (étape E47) et du temps nécessaire au calcul de la propagation de l'onde lumineuse émise par le plan $P_i$ en utilisant l'opérateur $P^s$ (étape E44):

$$T_d^S = \alpha M_d M + \beta M_d N^2 \qquad (21)$$

où $\alpha$ et $\beta$ sont des coefficients constants, M est le nombre total de points de la scène situés dans les plans d'indice j compris entre l et i-1 et $N^2$ le nombre total de pixels de l'hologramme H :

$$M = \sum_{j=l}^{i-1} M_j$$

$T_i^w$ est donné par

$$T_i^w = \gamma N^2 \log(N) \qquad (22)$$

où $\gamma$ est un coefficient constant. $\alpha$, $\beta$ et $\gamma$ doivent être déterminés de manière expérimentale et dépendent des capacités et performances du système sur lequel la méthode est exécutée, notamment en termes de puissance de calcul.
A titre d'exemple, on donne ci-dessous des valeurs adaptées à notre système :

$$\alpha = 1, \beta = 2 \text{ et } \gamma = 5,35.10^{-8}$$

Afin de maximiser l'efficacité de notre méthode, la valeur de seuil $M_{d,max}$ est fixée telle que

$$T_d^S = T_d^W \Leftrightarrow M_{d,max} = \frac{\gamma N^2 \log(N)}{\alpha M + \beta N^{\wedge}2} \qquad (23)$$

Un avantage de ce mode de réalisation de l'invention est qu'il permet de déterminer la technique la plus adaptée au traitement du plan courant sur la base d'une comparaison réaliste des temps de calcul associés au deux méthodes mises en compétition.

On notera que l'évaluation du seuil peut avantageusement être mise en oeuvre au cours d'une première passe de prétraitement de la pluralité de plans. En effet, selon le mode de réalisation de l'invention qui vient d'être décrit, le nombre de points par plan basé points pris en compte dans le procédé reste inchangé et égal au nombre de points d'amplitude non nulle de la scène Sc d'origine.

On notera également qu'en variante on pourrait tout aussi bien évaluer le seuil $M_{d,max}$ à partir d'estimations de complexité de calcul de la première et de la deuxième méthode pour le plan courant plutôt qu'à partir d'estimations de temps de calcul, de façon à rester indépendant d'éventuelles optimisations d'implémentation de la méthode sur un système particulier.

En relation avec Figure **9**, on décrit maintenant un mode de réalisation de l'invention permettant de simplifier l'étape $E_{47}$ de calcul de l'amplitude $o_{bi}$ bloquée par les points de la portion de scène comprise dans un plan intercalaire basé points $P_i$.

On considère un plan basé point $P_i$ et un plan précédent $P_{i-1}$. Le plan occultant $P_i$ est divisé en zones de A à H. Par exemple, ces zones présentent des formes géométriques simples, typiquement rectangulaires et ont toutes les mêmes dimensions.

Dans l'exemple de la Figure **9**, on considère les points $q_1$, $q_2$, $q_3$ et $q_4$ du plan $P_i$, disposés de telle sorte que :

- $q_2 \in A$;

- $q_1 \in B$;

- $q_3, q_4 \in C$.

On remarque que les zones *D, E, F, G* et *H* sont vides.

Dans le plan précédent Pi-1, on considère les points $q_k$, avec k entier compris entre 1 et 5. Pour chaque point $p_n$, avec n entier compris entre 1 et 4, du plan $P_{i-1}$, on calcule sur quelles zones du plan *Pi* sa lumière émise s'étend. On exploite pour cela la région de contribution d'une onde lumineuse sphérique décrite précédemment en relation avec la Figure **5.** Avantageusement, on détermine les zones du plan Pi qui ont une intersection non nulle avec le disque de rayon Rmax projeté du plan précédent Pi-1 sur le plan courant Pi. Par exemple, on voit que le point $p_1$ émet sur les zones *B* et *D*.

Pour chaque zone du plan *Pi,* on définit une liste *I* comprenant les points $p_k$ du plan $P_{i-1}$ qui l'illuminent:

- $I(A) = \{p_2\}$;

- $I(B) = \{p_1\}$;

- $I(C) = \{p_2,p_4\}$;

- $I(D) = \{p_1,p_2,p_3\}$;

- $I(E) = \{p_4,p_5\}$;

- $I(F) = \{p_3,p_5\}$;

- $I(G) = \{p_5\}$;

- $I(H) = \{p_5\}$.

Chaque point $q_j$ du plan Pi n'occulte donc que la lumière provenant des points $p_k$ du plan $P_{i-1}$ qui illuminent la zone dans laquelle il se trouve. Par exemple, le point $q_1 \in B$ n'occulte que la lumière provenant des points compris dans la liste $I(B)$, c'est-à-dire que la lumière provenant de $p_1$.

De cette manière, on ne calcule l'amplitude ob de l'onde lumineuse bloquée par la portion de scène comprise dans le plan $P_i$ que pour les points de $P_{i-1}$ qui contribuent effectivement à illuminer les zones de $P_i$ comprenant des points de la scène d'amplitude non nulle. La complexité calculatoire de l'étape E47 se trouve donc réduite.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

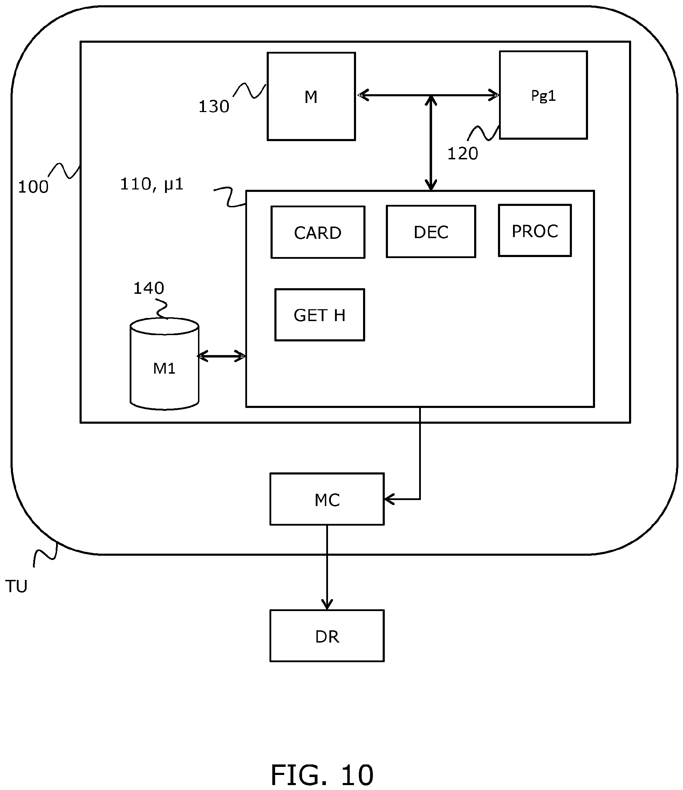

En relation avec la figure **10,** on présente maintenant un exemple de structure simplifiée d'un dispositif 100 de génération numérique d'un hologramme à partir d'une scène tridimensionnelle selon l'invention. Le dispositif 100 met en oeuvre le procédé de génération selon l'invention qui vient d'être décrit en relation avec les Figures **2** et **4.**

Par exemple, le dispositif 100 comprend une unité de traitement 110, équipée d'un processeur u1, et pilotée par un programme d'ordinateur Pg1 120, stocké dans une mémoire 130 et mettant en oeuvre le procédé de selon l'invention.

A l'initialisation, les instructions de code du programme d'ordinateur Pg$_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, dans ces différents modes de réalisation, selon les instructions du programme d'ordinateur 120.

Dans cet exemple de réalisation de l'invention, le dispositif 100 comprend au moins une unité CARD de comptage d'un nombre de points de la scène d'amplitude non nulle dans le plan courant, une unité DEC de choix d'une première ou d'une deuxième technique de propagation d'une onde lumineuse émise par le plan courant en fonction d'un nombre de points d'amplitude non nulle de la portion de scène comprise dans le plan courant et d'une valeur de seuil prédéterminée, la première technique, dite basée points, destinées à calculer une somme d'ondes lumineuses émises par des sources ponctuelles constituées par les points de la portion de scène d'amplitude non nulle du plan courant sur un plan suivant, la deuxième technique, dite basée champ, apte à calculer globalement une onde lumineuse émise par la portion de scène comprise dans le plan courant sur un plan suivant, une unité de traitement du plan courant selon la technique de propagation choisie, apte à calculer une onde lumineuse émise par le plan courant et une unité GET H d'obtention de l'hologramme à partir des ondes lumineuses calculées pour la pluralité de plans.

Avantageusement, l'unité PROC de traitement du plan courant comprend des sous-unités d'identification du dernier plan basé champ traité, de calcul de l'onde lumineuse émise par la portion de scène comprise dans le plan courant et éventuellement, selon la technique choisie, une sous-unité de calcul de l'onde lumineuse propagée des plans précédents, une sous unité de calcul de l'onde lumineuse occultée par le plan courant et une sous unité de calcul de l'onde lumineuse totale $u_i$ émise par le plan courant.

Le dispositif 100 comprend en outre une unité M$_1$ de stockage des ondes lumineuses calculées pour la pluralité de plans.

Ces unités sont pilotées par le processeur $\mu1$ de l'unité de traitement 110.

De façon avantageuse, un tel dispositif 100 peut être intégré à un terminal d'utilisateur TU. A titre d'exemple, un tel terminal peut être un ordinateur personnel (pour « personal computer », en anglais), une tablette, un téléphone intelligent (pour « smartphone », en anglais) ou tout système matériel et/ou logiciel comprenant des ressources de calcul suffisantes pour mettre en oeuvre le procédé selon l'invention. Un tel terminal comprend en outre un module de commande par l'intermédiaire de moyens de connexion filaires ou non, d'un dispositif de restitution DR, de type téléviseur 2D, 3D ou 3D holographique, apte à restituer l'hologramme généré par le procédé selon l'invention. Bien sûr, pour un dispositif de restitution non holographique, il est nécessaire de prévoir, par exemple au sein du module de commande MC, un traitement intermédiaire d'adaptation du champ lumineux généreux afin de le rendre visualisable sur le dispositif de restitution DR.

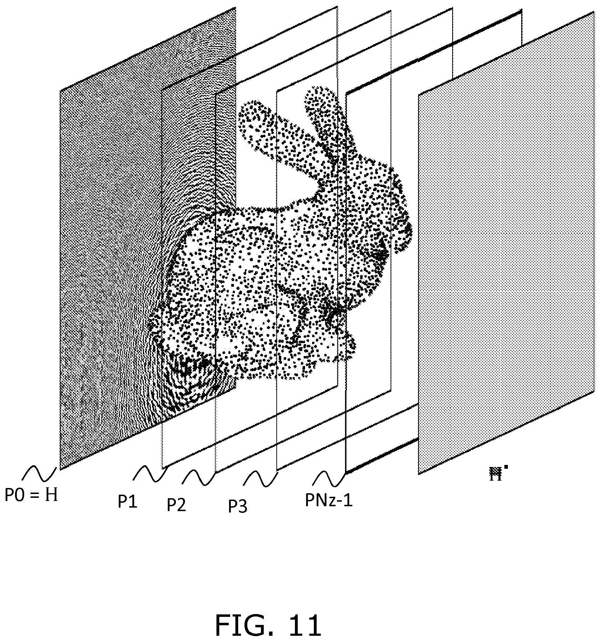

L'invention qui vient d'être présentée permet de générer numériquement un champ lumineux d'hologramme à partir d'une scène tridimensionnelle. En relation avec la Figure **11**, on présente maintenant un autre exemple d'usage possible de l'invention. On considère qu'on dispose d'un premier hologramme H qui a été généré à l'aide du procédé de l'invention ou d'un autre procédé. On ne connait pas a priori la première scène à l'origine de l'hologramme H. Dans le scénario dit d'holographie augmentée que l'on considère, on souhaite intégrer une deuxième scène comprenant au moins un objet supplémentaire devant la première scène. Dans l'exemple de la figure **11**, la deuxième scène se limite à un objet, en l'espèce un lapin.

Pour pouvoir s'intégrer correctement dans la scène, le lapin doit correctement occulter les éléments de la première scène se trouvant derrière lui. Comme nous ne connaissons pas la première scène correspondant à l'hologramme H, il est impossible d'utiliser des tests de visibilité entre le lapin et les autres éléments de la scène.

On propose de mettre en oeuvre le procédé de génération d'un champ lumineux d'hologramme selon l'invention, en découpant la deuxième scène en une pluralité de plans équidistants à partir du plan de l'hologramme H, tel que $P_0$ =H. La pluralité de plans comprend Nz plans qui sont traités selon l'invention comme des plans basés champs ou basés points, le plan $P_0$ = H et le plan $P_{Nz-1}$ étant des plans basés champ.

Le nouvel hologramme H' est obtenu par propagation de l'onde lumineuse $U_{Nz-1}$ calculée pour le dernier plan basé champ $P_{Nz-1}$ sur le plan de l'hologramme H'.

Ensuite, on peut éventuellement propager le champ lumineux H' obtenu dans le plan H pour conserver la position de l'hologramme original et voir apparaître la deuxième scène devant la première.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de génération numérique d'un hologramme (H) dans un plan ($P_H$), dit plan de l'hologramme, à partir d'une scène tridimensionnelle (Sc), comprenant une étape (E0) de découpage de ladite scène en une pluralité de plans ($P_0$, ..., $P_{Nz-1}$) parallèles au plan de l'hologramme, **caractérisé en ce que** le procédé comprend les étapes suivantes, mises en oeuvre pour un plan ($_{Pi}$) de la pluralité de plans, dit plan courant, les plans étant parcourus du plus éloigné au plus proche du plan de l'hologramme :

   - comptage ($E_1$) d'un nombre de points ($M_i$) de la scène d'amplitude non nulle dans le plan courant ;
   - choix ($E_2$) d'une première ou d'une deuxième technique (T1,T2) de propagation d'une onde lumineuse émise par le plan courant en fonction du nombre de points d'amplitude non nulle de la portion de scène comprise dans le plan courant et d'une valeur de seuil prédéterminée ($M_{i,max}$), la première technique (T1), dite basée points, étant destinée à calculer la propagation d'une somme d'ondes lumineuses émises par des sources ponctuelles constituées par les points de la portion de scène d'amplitude non nulle du plan courant sur un plan suivant, la deuxième technique (T2), dite basée champ, destinée à calculer globalement la propagation d'un champ lumineux émis par la portion de scène comprise dans le plan courant sur un plan suivant, la première technique étant choisie si le nombre de points est strictement inférieur à la valeur de seuil prédéterminée et la deuxième sinon ;
   - traitement ($E_4$) du plan courant en fonction de la technique de propagation choisie, destiné à calculer une onde lumineuse ($u_i$) émise par le plan courant;

   lesdites étapes étant répétées pour la pluralité de plans,
   et **en ce que** le procédé comprend en outre une étape (E6) d'obtention de l'hologramme à partir des ondes lumineuses calculées pour la pluralité de plans.

2. Procédé de génération numérique d'un hologramme selon la revendication **1**, **caractérisé en ce que** ladite étape de traitement ($E_4$) du plan courant comprend les sous-étapes suivantes :

   - identification ($E_{41}$) du dernier plan traité selon la deuxième technique, dit dernier plan basé champ ($P_l$);
   - calcul ($E_{42}$) de l'onde lumineuse émise par la portion de scène comprise dans le plan courant ;
   - lorsque la deuxième technique a été choisie pour le plan courant, dit plan basé champ, l'étape de traitement comprend en outre les sous-étapes suivantes :

     ◦ calcul ($E_{44}$) d'une propagation de l'onde lumineuse émise par au moins le dernier plan basé champ ($P_l$) sur le plan courant, selon la technique choisie pour ledit plan;
     ◦ calcul ($E_{46}$) de l'onde lumineuse émise par le plan courant par sommation de l'onde lumineuse émise par le plan courant et au moins la propagation de l'onde lumineuse émise par au moins le dernier plan basé champ ; et

   **en ce que** l'étape (E6) d'obtention de l'hologramme comprend le calcul de la propagation de l'onde lumineuse émise par le plan basé champ le plus proche de l'hologramme ($P_{Nz-1}$) sur le plan de l'hologramme ($P_H$).

3. Procédé de génération numérique d'un hologramme selon la revendication **2**, **caractérisé en ce que**, lorsque ledit au moins un plan précédent comprend en outre au moins un plan basé points ($P_j$), intercalé entre le dernier plan basé champ et le plan courant, le calcul de la propagation de l'onde lumineuse émise par au moins le dernier plan basé champ sur le plan courant ($P_i$) comprend en outre le calcul d'une propagation de l'onde lumineuse émise par les points d'amplitude non nulle de la portion de scène comprise dans ledit au moins un plan intercalaire sur le plan courant selon la première technique.

4. Procédé de génération numérique d'un hologramme selon l'une des revendications **2** et **3**, **caractérisé en ce que** l'étape de traitement ($E_4$) du plan courant comprend une sous-étape ($E_{45}$) de gestion d'une occultation de l'onde lumineuse propagée par au moins le dernier plan basé champ ($P_l$) dans le plan courant par application d'un masque binaire occultant ($m_i$) à ladite onde lumineuse, ledit masque prenant une valeur nulle aux points de la portion de scène comprise dans le plan courant ($P_i$) et une valeur non nulle en dehors de cette portion et **en ce que** la sous-étape ($E_{46}$) de calcul de l'onde lumineuse ($u_i$) émise par le plan courant comprend une sommation de l'onde lumineuse ($o_i$) émise par le plan courant à l'onde lumineuse obtenue après application du masque binaire occultant ($m_i$).

5. Procédé de génération numérique d'un hologramme selon l'une des revendications **3** et **4,** caractérisé en ce lorsque la première technique a été choisie pour traiter le plan courant, dit plan dit basé points, l'étape de traitement ($E_4$) comprend en outre les sous-étapes suivantes :

    - calcul ($E_{47}$) d'une onde lumineuse ($o_{bi}$) propagée par au moins le dernier plan basé champ ($P_l$) selon la première technique et bloquée par les points d'amplitude non nulle de la portion de scène comprise dans le plan courant ;
    - calcul ($E_{48}$) de l'onde lumineuse ($u_i$) émise par le plan courant par soustraction de l'onde lumineuse ($o_{bi}$) bloquée par les points d'amplitude non nulle de la portion de scène comprise dans le plan courant à l'onde lumineuse ($o_i$) émise par lesdits points.

6. Procédé de génération numérique d'un hologramme selon la revendication **5, caractérisé en ce que** la sous-étape ($E_{47}$) de calcul de l'onde lumineuse bloquée comprend le calcul de l'onde lumineuse propagée au moins par le dernier plan basé champ ($P_l$) selon la première technique et l'application d'un masque binaire occultant inversé ($a_i$) à l'onde lumineuse calculée, ledit masque prenant une valeur non nulle aux points de la portion de scène comprise dans le plan courant et une valeur nulle en dehors de cette portion.

7. Procédé de génération numérique d'un hologramme selon la revendication **6, caractérisé en ce que** la sous-étape de calcul ($E_{47}$) de l'onde lumineuse bloquée comprend un découpage en une pluralités de zones du plan courant, une détermination des points d'un plan précédent à partir du dernier plan basé champ, contribuant à la propagation d'une onde lumineuse dans au moins une zone de la pluralité de zones comprenant des points d'amplitude non nulle de la portion de scène comprise dans le plan courant, le calcul de l'onde lumineuse bloquée n'étant effectué que pour les points déterminés.

8. Procédé de génération numérique d'un hologramme selon l'une des revendications précédentes, **caractérisé en ce qu'**il comprend une étape ($E_3$) d'évaluation du seuil ($M_{i,max}$) au moins en fonction d'un de temps de traitement estimé pour la première technique de propagation, d'un temps de traitement estimé par la deuxième technique de propagation pour le plan courant et un nombre de points d'amplitude non nulle de la portion de scène comprise dans les plans précédents.

9. Dispositif (100) de génération numérique d'un hologramme (H) dans un plan ($P_H$), dit plan de l'hologramme, à partir d'une scène tridimensionnelle (Sc), comprenant une unité (CUT) de découpage de ladite scène en une pluralité de plans ($P_0$, ..., $P_{Nz-1}$) parallèles au plan de l'hologramme, **caractérisé en ce que** le dispositif comprend les unités suivantes, aptes à être

    - comptage (CARD) d'un nombre de points de la scène d'amplitude non nulle dans le plan courant ;
    - choix (DEC) d'une première ou d'une deuxième technique de propagation d'une onde lumineuse émise par le plan courant en fonction d'un nombre de points d'amplitude non nulle de la portion de scène comprise dans le plan courant et d'une valeur de seuil prédéterminée, la première technique ($T_1$), dite basée points, destinée à calculer une somme d'ondes lumineuses émises par des sources ponctuelles constituées par les points de la portion de scène d'amplitude non nulle du plan courant sur un plan suivant, la deuxième technique ($T_2$), dite basée champ, destinée à calculer globalement une onde lumineuse émise par la portion de scène comprise dans le plan courant sur un plan suivant, la première technique étant choisie si le nombre de points est strictement inférieur à la valeur de seuil prédéterminée et la deuxième sinon ;
    - traitement (PROC) du plan courant selon la technique de propagation choisie, destiné à calculer une onde lumineuse émise par le plan courant;

la mise en oeuvre desdites unités étant répétée pour la pluralité de plans,
et **en ce que** le dispositif comprend en outre une unité (GET H) d'obtention de l'hologramme à partir des ondes lumineuses calculées pour la pluralité de plans.

**10.** Terminal d'utilisateur (TU) comprenant un module de commande (MC) d'un dispositif de restitution (DR) d'un hologramme (H), **caractérisé en ce qu'**il comprend en outre un dispositif (100) de génération numérique dudit hologramme selon la revendication **9**.

**11.** Programme d'ordinateur (Pg1) comprenant des instructions pour la mise en oeuvre du procédé de traitement selon l'une des revendications **1** à **8,** lorsqu'il est exécuté par un processeur.

**12.** Support d'enregistrement lisible par un processeur, mémorisant un programme d'ordinateur comprenant des instructions de code de programme pour l'exécution des étapes du procédé selon l'une des revendications **1** à **8.**

**Patentansprüche**

**1.** Verfahren zur digitalen Erzeugung eines Hologramms (H) in einer Ebene ($P_H$), die als Hologrammebene bezeichnet wird, aus einer dreidimensionalen Szene (Sc), umfassend einen Schritt (E0) des Schneidens der Szene in eine Vielzahl von Ebenen ($P_0$, ..., $P_{Nz-1}$) parallel zur Hologrammebene, **dadurch gekennzeichnet, dass** das Verfahren die folgenden Schritte umfasst, welche für eine Ebene ($P_i$) der Vielzahl von Ebenen, die als aktuelle Ebene bezeichnet wird, durchgeführt werden, wobei die Ebenen von der am weitesten von der Hologrammebene entfernten zu der dieser nächstliegenden durchlaufen werden:

- Zählen ($E_1$) einer Anzahl von Punkten ($M_I$) der Szene mit einer Amplitude von Nicht-Null in der aktuellen Ebene;
- Wählen ($E_2$) einer ersten oder einer zweiten Technik (T1, T2) der Ausbreitung einer Lichtwelle, die von der aktuellen Ebene emittiert wird, als Funktion der Anzahl von Punkten mit einer Amplitude von Nicht-Null des Abschnitts der Szene, der in der aktuellen Ebene enthalten ist, und eines vorherbestimmten Schwellenwerts ($M_{I,max}$), wobei die erste Technik (T1), die als punktbasiert bezeichnet wird, dazu bestimmt ist, die Ausbreitung einer Summe von Lichtwellen, die von Punktquellen emittiert werden, bestehend aus den Punkten des Abschnitts der Szene mit einer Amplitude von Nicht-Null, von der aktuellen Ebene in einer folgenden Ebene zu berechnen, wobei die zweite Technik (T2), die als feldbasiert bezeichnet wird, dazu bestimmt ist, global die Ausbreitung eines Lichtfelds, das von dem Abschnitt der Szene emittiert wird, der in der aktuellen Ebene enthalten ist, in einer folgenden Ebene zu bestimmen, wobei die erste Technik gewählt wird, wenn die Anzahl von Punkten streng kleiner ist als der vorherbestimmte Schwellenwert, und die zweite, wenn nicht;
- Behandeln ($E_4$) der aktuellen Ebene als Funktion der gewählten Ausbreitungstechnik, die dazu bestimmt ist, eine Lichtwelle ($u_i$) zu berechnen, die von der aktuellen Ebene emittiert wird;

wobei die Schritte für die Vielzahl von Ebenen wiederholt werden,
und dadurch, dass das Verfahren außerdem einen Schritt (E6) des Erhaltens des Hologramms aus den Lichtwellen umfasst, die für die Vielzahl von Ebenen berechnet werden.

**2.** Verfahren zur digitalen Erzeugung eines Hologramms nach Anspruch 1, **dadurch gekennzeichnet, dass** der Schritt ($E_4$) des Behandelns der aktuellen Ebene die folgenden Teilschritte umfasst:

- Identifizieren ($E_{41}$) der letzten Ebene, die gemäß der zweiten Technik behandelt wurde, die als letzte feldbasierte Ebene ($P_l$) bezeichnet wird;
- Berechnen ($E_{42}$) der Lichtwelle, die von dem Abschnitt der Szene emittiert wird, der in der aktuellen Ebene enthalten ist;
- wobei, wenn die zweite Technik für die aktuelle Ebene gewählt wurde, die als feldbasierte Ebene bezeichnet wird, der Behandlungsschritt außerdem die folgenden Teilschritte umfasst:

  ◦ Berechnen ($E_{44}$) einer Ausbreitung der Lichtwelle, die mindestens von der letzten feldbasierten Ebene ($P_l$) emittiert wird, in der ersten Ebene, gemäß der für die Ebene gewählten Technik;
  ◦ Berechnen ($E_{46}$) der Lichtwelle, die von der aktuellen Ebene emittiert wird, durch Summierung der Lichtwelle, die von der aktuellen Ebene emittiert wird, und mindestens der Ausbreitung der Lichtwelle, die mindestens von der letzten feldbasierten Ebene emittiert wird; und

dadurch, dass der Schritt (E6) des Erhaltens des Hologramms die Berechnung der Ausbreitung der Lichtwelle, welche von der feldbasierten Ebene emittiert wird, die dem Hologramm am nächsten liegt ($P_{Nz-1}$), in der Hologrammebene ($P_H$) umfasst.

3. Verfahren zur digitalen Erzeugung eines Hologramms nach Anspruch 2, **dadurch gekennzeichnet, dass**, wenn die mindestens eine vorhergehende Ebene außerdem mindestens eine punktbasierte Ebene ($P_j$) umfasst, die zwischen der letzten feldbasierten Ebene und der aktuellen Ebene angeordnet ist, die Berechnung der Ausbreitung der Lichtwelle, die mindestens von der letzten feldbasierten Ebene emittiert wird, in der aktuellen Ebene ($P_i$) außerdem die Berechnung einer Ausbreitung der Lichtwelle, die von den Punkten mit einer Amplitude von Nicht-Null des Abschnitts der Szene emittiert wird, der in der mindestens einen dazwischenliegenden Ebene enthalten ist, in der aktuellen Ebene gemäß der ersten Technik umfasst.

4. Verfahren zur digitalen Erzeugung eines Hologramms nach einem der Ansprüche 2 und 3, **dadurch gekennzeichnet, dass** der Schritt ($E_4$) des Behandelns der aktuellen Ebene einen Teilschritt ($E_{45}$) der Steuerung einer Abdeckung der Lichtwelle, die mindestens von der letzten feldbasierten Ebene ($P_l$) ausgebreitet wird, in der aktuellen Ebene umfasst, durch Anlegen einer binären Abdeckmaske ($m_i$) an die Lichtwelle, wobei die Maske einen Wert von Null an den Punkten des Abschnitts der Szene, der in der aktuellen Ebene ($P_j$) enthalten ist, und einen Wert von Nicht-Null außerhalb dieses Abschnitts annimmt, und dadurch, dass der Teilschritt ($E_{46}$) der Berechnung der Lichtwelle ($u_i$), die von der aktuellen Ebene emittiert wird, eine Summierung der Lichtwelle ($o_i$), die von der aktuellen Ebene emittiert wird, mit der Lichtwelle, die nach dem Anlegen der binären Abdeckmaske ($m_i$) erhalten wird, umfasst.

5. Verfahren zur digitalen Erzeugung eines Hologramms nach einem der Ansprüche 3 und 4, **dadurch gekennzeichnet, dass**, wenn die erste Technik gewählt wurde, um die aktuelle Ebene zu behandeln, die als punktbasierte Ebene bezeichnet wird, der Behandlungsschritt ($E_4$) außerdem die folgenden Teilschritte umfasst:

   - Berechnen ($E_{47}$) einer Lichtwelle ($o_{bi}$), die mindestens von der letzten feldbasierten Ebene ($P_l$) emittiert wird, gemäß der ersten Technik, und die durch die Punkte mit einer Amplitude von Nicht-Null des Abschnitts der Szene blockiert wird, der in der aktuellen Ebene enthalten ist;
   - Berechnen ($E_{48}$) der Lichtwelle ($u_i$), die von der aktuellen Ebene emittiert wird, durch Subtraktion der Lichtwelle ($o_{bi}$), die durch die Punkte mit einer Amplitude von Nicht-Null des Abschnitts der Szene blockiert wird, der in der aktuellen Ebene enthalten ist, von der Lichtwelle ($o_i$), die von den Punkten emittiert wird.

6. Verfahren zur digitalen Erzeugung eines Hologramms nach Anspruch 5, **dadurch gekennzeichnet, dass** der Teilschritt ($E_{47}$) der Berechnung der blockierten Lichtwelle umfasst: die Berechnung der Lichtwelle, die mindestens von der letzten feldbasierten Ebene ($P_l$) emittiert wird, gemäß der ersten Technik, und das Anlegen einer inversen binären Abdeckmaske ($a_i$) an die berechnete Lichtwelle, wobei die Maske einen Wert von Nicht-Null an den Punkten des Abschnitts der Szene, der in der aktuellen Ebene enthalten ist, und einen Wert von Null außerhalb dieses Abschnitts annimmt.

7. Verfahren zur digitalen Erzeugung eines Hologramms nach Anspruch 6, **dadurch gekennzeichnet, dass** der Teilschritt ($E_{47}$) der Berechnung der blockierten Lichtwelle umfasst: ein Schneiden der aktuellen Ebene in eine Vielzahl von Zonen, eine Bestimmung der Punkte einer vorhergehenden Ebene aus der letzten feldbasierten Ebene, die beitragen zur Ausbreitung einer Lichtwelle in mindestens einer Zone der Vielzahl von Zonen, umfassend Punkte mit einer Amplitude von Nicht-Null des Abschnitts der Szene, der in der aktuellen Ebene enthalten ist, wobei die Berechnung der blockierten Lichtwelle nur für die bestimmten Punkte durchgeführt wird.

8. Verfahren zur digitalen Erzeugung eines Hologramms nach einem der vorhergehenden Ansprüche, **dadurch gekennzeichnet, dass** dieses einen Schritt ($E_3$) der Evaluierung einer Schwelle ($M_{l,max}$) mindestens als Funktion einer Behandlungszeit, die für die erste Ausbreitungstechnik geschätzt wird, einer Behandlungszeit, die für die zweite Ausbreitungstechnik geschätzt wird, für die aktuelle Ebene und einer Anzahl von Punkten mit einer Amplitude von Nicht-Null des Abschnitts der Szene, der in den vorhergehenden Ebenen enthalten ist.

9. Vorrichtung (100) zur digitalen Erzeugung eines Hologramms (H) in einer Ebene ($P_H$), die als Hologrammebene bezeichnet wird, aus einer dreidimensionalen Szene (Sc), umfassend eine Einheit (CUT) zum Schneiden der Szene in eine Vielzahl von Ebenen ($P_0$, ..., $P_{Nz-1}$) parallel zur Hologrammebene, **dadurch gekennzeichnet, dass** die Vorrichtung die folgenden Einheiten umfasst, die geeignet sind zum:

   - Zählen (CARD) einer Anzahl von Punkten der Szene mit einer Amplitude von Nicht-Null in der aktuellen Ebene;

- Wählen (DEC) einer ersten oder einer zweiten Technik der Ausbreitung einer Lichtwelle, die von der aktuellen Ebene emittiert wird, als Funktion der Anzahl von Punkten mit einer Amplitude von Nicht-Null des Abschnitts der Szene, der in der aktuellen Ebene enthalten ist, und eines vorherbestimmten Schwellenwerts, wobei die erste Technik ($T_1$), die als punktbasiert bezeichnet wird, dazu bestimmt ist, eine Summe von Lichtwellen, die von Punktquellen emittiert werden, bestehend aus den Punkten des Abschnitts der Szene mit einer Amplitude von Nicht-Null, von der aktuellen Ebene in der folgenden Ebene zu berechnen, wobei die zweite Technik ($T_2$), die als feldbasiert bezeichnet wird, dazu bestimmt ist, global eine Lichtwelle, die von dem Abschnitt der Szene emittiert wird, der in der aktuellen Ebene enthalten ist, in einer folgenden Ebene zu bestimmen, wobei die erste Technik ausgewählt wird, wenn die Anzahl von Punkten streng kleiner ist als der vorherbestimmte Schwellenwert, und die zweite, wenn nicht;
- Behandeln (PROC) der aktuellen Ebene gemäß der gewählten Ausbreitungstechnik, die dazu bestimmt ist, eine Lichtwelle zu berechnen, die von der aktuellen Ebene emittiert wird;

wobei die Verwendung der Einheiten für die Vielzahl von Ebenen wiederholt wird,
und dadurch, dass die Vorrichtung außerdem eine Einheit (GET H) zum Erhalten des Hologramms aus den Lichtwellen umfasst, die für die Vielzahl von Ebenen berechnet werden.

**10.** Benutzerterminal (TU), umfassend ein Steuermodul (MC) einer Vorrichtung zur Wiederherstellung (DR) eines Hologramms (H), **dadurch gekennzeichnet, dass** dieses außerdem eine Vorrichtung (100) zur digitalen Erzeugung des Hologramms nach Anspruch 9 umfasst.

**11.** Computerprogramm (Pg1), umfassend Instruktionen zur Durchführung des Verfahrens nach einem der Ansprüche 1 bis 8, wenn dieses von einem Prozessor ausgeführt wird.

**12.** Prozessorlesbares Speichermedium, welches ein Computerprogramm speichert, umfassend Programmcodeinstruktionen zur Ausführung der Schritte des Verfahrens nach einem der Ansprüche 1 bis 8.

**Claims**

**1.** A method for digitally generating a hologram (H) in a plane ($P_H$), so-called plane of the hologram, from a three-dimensional scene (Sc) comprising a step (E0) of cutting said scene into a plurality of planes ($P_0$, ..., $P_{Nz-1}$) parallel to the hologram plane, **characterized in that** the method comprises the following steps, implemented for a plane ($P_i$) of the plurality of planes, so-called current plane, the planes being browsed from the farthest to the nearest plane of the hologram:

- counting ($E_1$) a number of points ($M_i$) of the non-zero amplitude scene in the current plane;
- choosing ($E_2$) a first or a second technique (T1, T2) for propagating a light wave emitted by the current plane as a function of a number of points of non-zero amplitude of the scene portion comprised in the current plane and with a preset threshold value ($M_{i,max}$), the first, so-called point-based technique (T1) for calculating the propagation of a sum of light waves emitted by point sources constituted by the points of the scene portion of a non-zero amplitude of the current plane on a following plane, the second, so-called field-based technique (T2), for calculating globally the propagation of a light field emitted by the scene portion comprised in the current plane on a following plane, the first technique being chosen if the number of points is strictly lower than the preset threshold value and the second, otherwise;
- processing ($E_4$) the current plane according to the chosen propagation technique, for calculating a light wave ($u_i$) emitted by the current plane;

said steps being repeated for the plurality of planes,
and **in that** the method further comprises a step (E6) for obtaining the hologram from light waves calculated for the plurality of planes.

**2.** The method for digitally generating a hologram according to claim **1, characterized in that** said processing step ($E_4$) of the current plane comprises the following substeps:

- identifying ($E_{41}$) the last plane processed according to the second technique, so-called last field-based plane ($P_l$);
- calculating ($E_{42}$) the light wave emitted by the scene portion comprised in the current plane;

- when the second technique has been chosen for the current plane, so-called field-based plane, the processing step comprises the following substeps:

∘ calculating ($E_{44}$) a propagation of the light wave emitted by at least the last field-based plane ($P_l$) on the current plane, according to the technique chosen for said plane;
∘ calculating ($E_{46}$) the light wave emitted by the current plane by summing the light wave emitted by the current plane and at least the propagation of the light wave emitted by at least the last field-based plane; and

**in that** the step ($E6$) of obtaining the hologram comprises calculating the propagation of the light wave emitted by the field-based plane closest to the hologram ($P_{Nz-1}$) on the plane of the hologram ($P_H$).

3. The method for digitally generating a hologram according to claim **2, characterized in that**, when said at least one previous plane further comprises at least one point-based intermediate plane ($P_j$), interposed between the last field-based plane and the current plane, calculating the propagation of the emitted light wave by at least the last field-based plane on the current plane ($P_i$) further comprises calculating a propagation of the light wave emitted by the points of non-zero amplitude of the scene portion comprised in said at least one intermediate plane on the current plan according to the first technique.

4. The method for digitally generating a hologram according to one of claims **2** and **3** , **characterized in that** the processing step ($E_4$) of the current plane comprises a substep ($E_{45}$) for managing an occultation of the light wave propagated through at least the last field-based plane ($P_l$) in the current plane by applying an occulting binary mask ($m_i$) to said light wave, said mask assuming a zero value at the points of the scene portion included in the current plane ($P_j$) and a non-zero value outside this portion and **in that** the substep ($E_{46}$) of calculating the light wave ($u_i$) emitted by the current plane comprises a summation of the light wave ($o_i$) emitted by the current plane to the light wave obtained after application of the occulting binary mask ($m_i$).

5. The method for digitally generating a hologram according to one of claims **3** and **4,** wherein when the first method was chosen to process the current plane, so-called point-based plane, the processing step ($E_4$) further comprises the following substeps of:

- calculating ($E_{47}$) a light wave ($o_{bi}$) propagated by at least the last field-based plane ($P_l$) according to the first technique and blocked by the points of non-zero amplitude of the scene portion comprised in the current plane;
- calculating ($E_{48}$) the light wave ($u_i$) emitted by the current plane by subtracting the light wave ($o_{bi}$) blocked by the points of non-zero amplitude of the scene portion comprised in the current plane at the light wave ($o_i$) emitted by said points.

6. The method for digitally generating a hologram according to claim **5, characterized in that** the substep ($E_{47}$) of calculating the blocked light wave comprises calculating the light waves propagated at least by the last field-based plane ($P_l$) according to the first technique and applying an inverted occulting binary mask ($a_i$) to the calculated light wave, said mask assuming a non-zero value at the points of the scene portion comprised in the current plane and a zero value outside this portion.

7. The method for digitally generating a hologram according to claim **6, characterized in that** the substep of calculating ($E_{47}$) the blocked light wave comprises cutting into a plurality of zones of the current plane, determining the points of a previous plane from the last field-based plane, contributing to the propagation of a light wave in a zone of the plurality of zones comprising points of non-zero amplitude of the scene portion comprised in the current plane, the blocked light wave being calculated only for the points thus determined.

8. The method for digitally generating a hologram according to any of the preceding claims, **characterized in that** it comprises a step ($E_3$) of evaluating the threshold ($M_{i,max}$) at least as a function of an estimated processing time for the first propagation technique, of an estimated processing time for the second propagation technique for the current plane, and a number of non-zero amplitude points of the scene portions comprised in the previous planes.

9. A device (100) for digitally generating a hologram (H) in a plane ($P_H$), so-called plane of the hologram, from a three-dimensional scene (Sc) comprising a unit (CUT) for cutting said scene into a plurality of planes ($P_0$, ..., $P_{Nz-1}$) parallel to the hologram plane, **characterized in that** the device comprises the following units, implemented for a plane (Pi) of the plurality of planes, so-called current plane, the planes being browsed from the farthest to the nearest plane of the hologram:

- counting (CARD) a number of points of the non-zero amplitude scene in the current plane;
- choosing (DEC) a first or a second technique for propagating a light wave emitted by the current plane as a function of a number of points of non-zero amplitude of the scene portion comprised in the current plane and with a preset threshold value, the first, so-called point-based technique ($T_1$) for calculating the propagation of a sum of light waves emitted by point sources constituted by the points of the scene portion of a non-zero amplitude of the current plane on a following plane, the second, so-called field-based technique ($T_2$), for calculating globally the propagation of a light field emitted by the scene portion comprised in the current plane on a following plane, the first technique being chosen if the number of points is strictly lower than the preset threshold value and the second, otherwise;
- processing (PROC) the current plane according to the chosen propagation technique, for calculating a light wave emitted by the current plane;

implementing said units being repeated for the plurality of planes,
and **in that** the device further comprises a unit (GET H) for obtaining the hologram from light waves calculated for the plurality of planes.

10. A user terminal (TU) comprising a control module (MC) of a playback device (DR) of a hologram (H), **characterized in that** it further comprises a device (100) for digitally generating said hologram according to claim **9.**

11. A computer program (Pg1) comprising instructions for implementing the method according to one of claims **1** to **8,** when executed by a processor.

12. A processor-readable recording medium, comprising a computer program stored thereon, which comprises instructions for performing the steps of a method according to one of claims 1 to 8.

FIG. 1

FIG. 2

FIG. 3

FIG. 4

FIG. 5

$u_d(x,y)$ $\qquad$ $u_{d+1}(x,y)$ $\qquad$ $u_{d+2}(x,y)$

$d$ $\qquad$ $d+1$ $\qquad$ $d+2$

FIG. 6

25

FIG. 7

FIG. 8

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. MATSUSHIMA, INTITULÉ.** Exact hidden-surface removal in digitally synthetic full-parallax holograms. *Proceedings de la conférence « Practical holography XIX : Material and applications »*

- Illumination for Computer Generated Pictures. *Communications of the ACM,* 1975, vol. 18 (6), 311-317
- Introduction to Fourier Optics. 2005, 55-58
- **GOODMAN.** Introduction to Fourier Optics. 2005, 57-61